# EUROPÄISCHE PATENTSCHRIFT

(11) **EP 4 110 617 B1**
(45) Veröffentlichungstag und Bekanntmachung des Hinweises auf die Patenterteilung: **05.06.2024**
(21) Anmeldenummer: 21723861.7
(22) Anmeldetag: 22.04.2021
(51) Int. Cl.: B32B 38/18, B32B 37/18, B32B 41/00, B27D 1/04, B27D 5/00, E04F 15/04

(54) **VORRICHTUNG UND VERFAHREN ZUM ABLEGEN VON FURNIEREN**
APPARATUS AND METHOD FOR DEPOSITING VENEERS
APPAREIL ET PROCÉDÉ DE DÉPÔT DE BOIS DE PLACAGE

(30) Priorität: 24.04.2020 EP 20171402
(43) Veröffentlichungstag der Anmeldung: 04.01.2023
(73) Patentinhaber: Flooring Technologies Ltd., Kalkara SCM1001 (MT)
(72) Erfinder: KALWA, Norbert, 32805 Horn-Bad Meinberg (DE)
(74) Vertreter: Kalkoff & Partner Patentanwälte mbB
(86) Internationale Anmeldenummer: PCT/EP2021/060560
(87) Internationale Veröffentlichungsnummer: WO 2021/214241

(56) Entgegenhaltungen:
- EP-A1- 1 749 627
- WO-A1-2015/078443
- US-A1- 2003 196 739

## Beschreibung

Die Erfindung betrifft eine Vorrichtung und ein Verfahren zum Ablegen von Furnierstreifen auf einer Trägerplatte.

Die Vorrichtung und das Verfahren können insbesondere beim Herstellen von Furnierböden angewendet werden. Diese umfassen eine Trägerplatte mit einer Echtholzfurnieroberfläche, die mittels eines Kunstharzes mit der Trägerplatte verklebt ist, wobei das Kunstharz beim Verpressen in das Furnier penetriert, sodass eine besonders wiederstandfähige Echtholzoberfläche entsteht. Vorrichtungen zum Fördern von Furnieren sind z. B. aus der US 2003/196,739 A1, der EP 1 749 627 A1 oder der WO 2015/078443 A1 bekannt.

Zum Herstellen der Furnierböden wird oberhalb der Trägerplatte eine Kunstharzschicht und auf die Kunstharzschicht eine Furnierschicht angeordnet. Das Paket aus den aufeinandergestapelten Schichten wird in einer KT-Presse unter Einwirkung von Druck und Wärme miteinander verpresst. Nach dem Verpressen erfolgt eine Nachbehandlung, die unter anderem das Auftrennen und Aufschneiden der furnierbeschichteten Trägerplatten zu Fußbodenpaneelen und bspw. das Anordnen von Verriegelungsprofilen an den Seiten umfasst.

Derartige Fußbodenpaneele sind bspw. aus der WO 2015/078443 A1 bekannt. Die Echtholzfurnieroberfläche wird bspw. durch Furniere erzeugt, die aus einzelnen miteinander verklebten oder vernähten Furnierstreifen bestehen und auf die Trägerplatte aufgelegt werden. Derartig großformatige Furnierformate sind zwar für den Prozess besonders geeignet, sind aber relativ teuer. Zudem nimmt man in Kauf, dass das Furnier, das sich in den Bereichen befindet, wo später die Profile angefräst werden, verloren geht. Dies erhöht die Kosten und reduziert die Auswahlmöglichkeiten bei den Lieferanten. Auch ist es bekannt, einzelne Furnierstreifen nebeneinander, mit einem Spalt für den späteren Trennschnitt und das Profil auf die Trägerplatte aufzulegen. Das Auflegen erfolgt bspw. mittels Legestationen, die die Furniere oder Furnierstreifen ansaugen und anschließend in der richtigen Position auf der Trägerplatte ablegen. Durch dieses Verfahren können Materialkosten eingespart werden.

Das Anordnen der Furniere auf der Trägerplatte mittels einer Legestation ist zeitaufwendig und somit teuer. Auch werden die Furniere beim Transport mit Vakuumhebern leicht beschädigt. Hinzu kommt, dass Furniere bzw. Furnierstreifen dazu neigen sich zu verziehen, wodurch eine genaue Positionierung der Furniere weiter erschwert wird.

Der Erfindung liegt somit die Aufgabe zugrunde eine Vorrichtung und ein Verfahren bereitzustellen, mit dem Furniere auf eine Trägerplatte besonders einfach, schnell und präzise aufgebracht werden können.

Die Erfindung wird gelöst durch eine Vorrichtung nach Anspruch 1 und ein Verfahren nach Anspruch 12. Vorteilhafte Weiterbildungen der Erfindung werden in den abhängigen Ansprüchen dargestellt. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung.

Die erfindungsgemäße Vorrichtung zum Ablegen von Furnieren auf einer Trägerplatte, umfasst ein Furniermagazin im Bereich eines oberen Endes einer Transportvorrichtung mit mindestens zwei Fächern, die zum Lagern und Bereitstellen von Furnierstreifen ausgebildet sind, Mittel zum Überführen der Furnierstreifen von den Fächern auf die Transportvorrichtung, wobei die Transportvorrichtung sich ausgehend von einem oberen Ende schräg nach unten in Richtung eines unteren Endes im Bereich einer Transportebene für die Trägerplatte erstreckt und dazu ausgebildet ist, mindestens zwei einzelne nebeneinander angeordnete Furnierstreifen von dem oberen Ende zum unteren Ende zu transportieren und auf der Trägerplatte abzulegen, und ein Überwachungssystem zum Erfassen der Position der Furnierstreifen auf der Transportvorrichtung.

Die Zuführung der einzelnen Furnierstreifen über eine von der Transportvorrichtung gebildete schräge Ebene ermöglicht eine besonders einfache und schnelle Zuführung der Furniere bzw. Furnierstreifen auf die Trägerplatte. Zudem bietet die Transportvorrichtung die Möglichkeit einer optimalen Vorpositionierung der Furniere, sodass beim Ablegen der Furniere von der Transportvorrichtung auf die Trägerplatte die Furnierstreifen bereits in einer zumindest weitestgehend optimalen Position auf der Trägerplatte vorliegen. Durch den Transport auf der Transportvorrichtung und die dadurch von unten vorliegende Stützung der Furniere wird der Verzugsneigung der Furniere entgegengewirkt.

Ein weiterer Vorteil der Erfindung ist, dass eine derartige Vorrichtung zumeist unproblematisch in ein bestehendes Beschichtungssystem für Trägerplatten integriert werden kann, da sie nur einen geringen Bauraum oberhalb der eigentlichen Transportebene der Trägerplatte benötigt.

Die Transportvorrichtung ist beispielsweise als Transportkette oder Transportband ausgebildet. Sie kann mehrteilig ausgebildet sein, sodass beispielsweise mehrere einzelne Transportbänder nebeneinander angeordnet sind, die gemeinsam die Transportvorrichtung ausbilden. So kann die Transportvorrichtung für jeden Furnierstreifen ein Transportabschnitt bspw. ein Transportband, Vakuumband o.ä. aufweisen, die wiederum gemeinsam die Transportvorrichtung ausbilden.

Die Transportvorrichtung erstreckt sich schräg nach unten in Richtung auf die Transportebene der Trägerplatte. D. h., die Transportvorrichtung bildet eine sich von der Transportebene der Trägerplatte schräg nach oben erstreckende schräge Ebene aus. Die schräge Ebene, d. h. die von der Transportvorrichtung gebildete Ebene, entlang der die Furniere transportiert werden, ist in einem Winkel von ≠ 0° zur Transportebene angeordnet. Die Furniere erfahren beim Transport auf der Transportvorrichtung somit sowohl eine Bewegung in horizontale Richtung als auch in vertikale Richtung. Die Transportvorrichtung weist zwei sich gegenüberliegende Enden (oberes Ende, unteres Ende) auf. Die Transportvorrichtung liegt mit beiden Enden oberhalb der Transportebene für die Trägerplatte. Zum Auflegen der Furnierstreifen auf die Trägerplatte wird die Trägerplatte üblicherweise in einer Transportrichtung und entlang ihrer Transportebene bewegt. Das untere Ende der Transportvorrichtung ist in Vertikalrichtung unterhalb des oberen Endes und in Transportrichtung hinter dem oberen Ende angeordnet.

Die Transportvorrichtung ist zur Aufnahme von mindestens zwei Furnierstreifen ausgebildet, die separat voneinander auf der Transportvorrichtung angeordnet, beispielsweise aufgelegt werden. D. h., die Furniere werden quer zu ihrer Längsachsenrichtung, welche der Transportrichtung entspricht, nebeneinander angeordnet.

Unter einem Furnierstreifen wird insbesondere ein im Verhältnis zu seiner Breite mindestens um den Faktor 1,5 längeres Furnier verstanden. Furniere an sich sind bekannt und aus Massivholz hergestellte blattartige Holzbauteile. Furniere weisen üblicherweise eine Stärke im Bereich zwischen 0,5 mm bis maximal 10 mm auf. Für Furnierböden werden üblicherweise Furniere mit einer Breite im Bereich zwischen 8 cm bis 30 cm und einer Länge von mehreren Metern verwendet. Die Furniere werden durch Messern, Schälen oder Sägen eines Massivholzes hergestellt.

Im Rahmen dieser Erfindung werden aber auch solche Furniere als Furnierstreifen bezeichnet, die aus einzelnen Furnierteilen gefügt sind und deren Abmessungen so groß sein können, dass mit einem Furnierstreifen die gesamte Trägerplatte abgedeckt wird.

Die Furnierstreifen können hinsichtlich der Bindung an die Trägerplatte unbehandelt sein. Die Bindung an die Trägerplatte erfolgt in diesem Fall durch ein kunstharzgetränktes Vlies, insbesondere ein Papier oder ein Gelege aus Kunststofffasern oder mineralischen Fasern oder aus einer Mischung von natürlichen, synthetischen und/oder mineralischen Fasern, es kann aber auch ein kunstharzgetränktes Gewebe eingesetzt werden. Die Furnierstreifen können nach einer Weiterbildung der Erfindung aber auch mindestens einseitig mit einem Bindemittel versehen sein. Optional können Additive, z. B. Farbstoffe, Mittel zum Beizen des Furniers oder Brandschutzmittel im Bindemittel oder zwischen Bindemittel und Furnier angeordnet sein. Ist das Bindemittel bereits auf dem Furnier vorgesehen, dann kann auf ein kunstharzgetränktes Vlies oder Gewebe verzichtet werden und das Furnier wird in der Presse unmittelbar mit der Trägerplatte verbunden.

Das Furniermagazin ist ein Behältnis für die Furnierstreifen. Das Magazin kann bspw. als Box ausgebildet sein. Das Furniermagazin kann einseitig offen oder zumindest einseitig geöffnet sein. Insbesondere weist das Furniermagazin eine Befüllöffnung zum Einlegen der Furniere in das Magazin auf und eine Entnahmeöffnung, aus der die Furniere entnommen und auf das Transportband bewegt werden können. Die Befüllöffnung und die Entnahmeöffnung können identisch sein.

Das Furniermagazin weist zudem mindestenszwei, bevorzugt mehr, Fächer auf, in denen jeweils Furnierstreifen gelagert werden. Unter einem Fach kann bereits ein abgeteilter Abschnitt des Furniermagazins zum Lagern von Furnierstreifen verstanden werden. Auch können die Fächer separate Bauteile sein, die bspw. zusammengesetzt das Furniermagazin ausbilden. Dabei liegen die Furnierstreifen vorzugsweise übereinandergestapelt, d. h. als Furnierstapel (im weiteren auch Furnierpaket) im Furniermagazin bzw. in den Fächern. Die Fächer sind insbesondere dazu ausgebildet die Furnierstreifen paketweise aufzunehmen und zu lagern, d. h. es liegt üblicherweise jeweils ein Furnierstapel in jedem Fach. Zudem ermöglichen die Fächer eine einfache Entnahme der einzelnen Furnierstreifen (Bereitstellen) aus jedem der Fächer, um sie auf der Transportvorrichtung anzuordnen.

Die Fächer bzw. das Furniermagazin sind derart angeordnet, dass sie eine erste Vorpositionierung für die Furnierstreifen auf der Transportvorrichtung bewirken. Hierunter ist insbesondere zu verstehen, dass die Fächer bereits in einer quer zur Transportrichtung weisende Querrichtung soweit nebeneinander ausgerichtet sind, dass die Furniere beim Überführen auf die Transportvorrichtung vorrangig nur noch in Transportrichtung bewegt werden müssen.

Neben dem Furniermagazin kann die erfindungsgemäße Vorrichtung auch ein Magazin für das kunstharzgetränkte Vlies oder Gewebe sowie eine korrespondierende Transportvorrichtung aufweisen, die ebenfalls der Transportvorrichtung für den oder die Furnierstreifen entspricht. Das Magazin für das kunstharzgetränkte Vlies oder Gewebe ist beim Auflegen von Furnierstreifen auf die Oberseite der Trägerplatte in Transportrichtung bzw. beim Ablauf des Verfahrens vor dem oder den Furniermagazinen angeordnet. Das Vlies oder Gewebe wird zuerst auf die Trägerplatte aufgelegt, erst danach werden die Furnierstreifen aufgebracht. Wird auch die Unterseite der Trägerplatte mit Furnierstreifen versehen, so ist ein Magazin für kunstharzgetränkte Vliese oder Gewebe nach dem Furniermagazin angeordnet.

Unter einer Trägerplatte wird insbesondere ein Plattenwerkstoff, bspw. eine Holzwerkstoffplatte, wie eine Faserplatte, Furnierholzplatte, OSB (oriented strand board ) oder Spanplatte verstanden. Die Trägerplatten können vor dem Auflegen der Furnierstreifen auch bereits mehrschichtet sein. So kann bspw. ein Stapel aus Furnieren, Klebeschichten und/oder Plattenwerkstoffen im Zusammenhang mit der Erfindung auch als Plattenwerkstoff auf den die Furnierstreifen aufgelegt werden verstanden werden.

Die Furnierstreifen werden in einer vorgegebenen Position auf die Trägerplatte aufgelegt. Dabei können die Furnierstreifen direkt aneinander, d.h. in Kontakt miteinander oder auch beabstandet, d.h. mit einem Spalt zwischen den Furnierstreifen abgelegt werden. Ein Spalt zwischen den Furnierstreifen auf der Trägerplatte ist dann vorteilhaft, wenn die furnierte Trägerplatte in einzelne Paneele aufgeteilt wird. Die Schnittfuge liegt in diesem Fall zwischen den Furnierstreifen und es wird ein Verlust an Furnier vermieden. Gleiches gilt, wenn die Paneele an den Kanten mit einem Profil versehen werden. Auch hier kann das Profilieren der Kanten in einem Bereich der furnierten Trägerplatte erfolgen, der kein Furnier aufweist.

Nach einer Weiterbildung der Erfindung ist eine Verstellvorrichtung zum Bewegen der Transportvorrichtung gegenüber der Transportebene angeordnet, wobei mittels der Verstellvorrichtung ein Winkel zwischen der durch die Transportvorrichtung gebildeten schrägen Ebene und der Transportebene, zwischen 10° und 60°, besonders bevorzugt zwischen 10° und 45° einstellbar und/oder der vertikale Abstand des unteren Endes der Transportvorrichtung zur Transportebene veränderbar ist.

Die Verstellvorrichtung ermöglicht dadurch insbesondere eine Anpassung der Vorrichtung an unterschiedlich starke Furnierstreifen. Dies ist vorteilhaft, da es gerade abhängig von der Stärke der Furnierstreifen bei dem Übergang der Furnierstreifen von der Transportvorrichtung auf die Trägerplatte zu Überführungsschwierigkeiten kommen kann, bspw. zu einem Verrutschen quer zur Transportrichtung. Diese können durch die Anpassung des Winkels zwischen der Transportvorrichtung und der Transportebene der Trägerplatte, welche letztlich parallel zur Plattenoberfläche ausgerichtet ist, vermindert bzw. vollständig verhindert werden. Dabei werden für stärkere Furniere im Bereich von bspw. 2 mm und stärker bevorzugt flachere Winkel im Bereich von 10° bis 20° und für dünnere Furniere (z.B. < 2 mm, insbesondere von 0,6 mm +/-0,2 mm) steilere Winkel, bspw. im Bereich von 20° bis 45° eingestellt.

Die Mittel zum Überführen der Furnierstreifen von den Fächern auf die Transportvorrichtung können unterschiedlich ausgebildet sein. So ist es beispielsweise denkbar, dass die Furniere mittels einer Zugvorrichtung aus den Fächern herausgezogen und auf der Transportvorrichtung abgelegt werden. Besonders bevorzugt sind die Mittel zum Überführen jedoch als Vakuumsauger ausgebildet, die die Furniere ansaugen, halten und auf der Transportvorrichtung und hier insbesondere im Bereich des oberen Endes, auflegen.

Die Mittel sind dabei derart ausgebildet, dass sie die vorpositionierten Furniere aus den Fächern zumindest weitestgehend ohne eine wesentliche Quer-Positionsveränderung in Richtung längs zur Transportrichtung aus den Fächern entnehmen und auf der Transportvorrichtung ablegen.

Um ein Verschieben der auf der Transportvorrichtung aufliegenden Furnierstreifen zu verhindern, kann eine entsprechende Fixiervorrichtung angeordnet sein. Diese kann beispielsweise entsprechende Halteklammern oder Halteleisten umfassen. Nach einer Weiterbildung der Erfindung ist jedoch eine Vakuumvorrichtung zum Erzeugen eines an der Transportvorrichtung anliegenden Vakuums zum Fixieren der Furnierstreifen auf der Transportvorrichtung vorgesehen. Die Vakuumvorrichtung saugt die Furnierstreifen von der Unterseite fest an die Transportvorrichtung, beispielsweise an ein Transportband an, so dass ein Verschieben der Furnierstreifen in Transportrichtung oder auch quer zur Transportrichtung sicher verhindert wird.

Um die Vorpositionierung der Furnierstreifen in dem Furniermagazin bzw. in den Fächern des Furniermagazins zu verbessern sind nach einer Weiterbildung der Erfindung eine Verschiebevorrichtung zum Bewegen der Furniermagazine und/oder der Fächer in Richtung quer zur Transportrichtung (Querrichtung) angeordnet. Die Verschiebemittel können dabei entweder zum Verschieben des gesamten Magazins oder auch zum Verschieben einzelner Fächer ausgebildet sein. Hierdurch können auf einfache Weise die einzelnen Furnierstreifen besonders exakt in Richtung quer zur Transportrichtung bereits vor dem Auflegen auf die Transportvorrichtung ausgerichtet werden. Auch kann das Furniermagazin bzw. können die Fächer auf unterschiedliche Furnierbreiten eingestellt werden.

Um die Flexibilität des Furniermagazins in Bezug auf unterschiedliche Furnierstreifen und unterschiedliche Furnierstreifenabmessung zu erhöhen, weist das Furniermagazin besonders bevorzugt 3 bis 10 nebeneinander angeordnete Fächer auf. Die Fächer sind üblicherweise zur Aufnahme unterschiedlicher Furnierbreiten ausgebildet.

Dabei ist die Verschiebevorrichtung insbesondere derart ausgebildet, dass zumindest einzelne Fächer, oder beispielsweise fächererzeugende Trennabschnitte (Trennwände o.ä.), in Richtung quer zur Transportrichtung aus dem Arbeitsbereich der Transportvorrichtung heraus bewegt werden können, wenn beispielsweise mit besonders breiten Furnieren der Arbeitsbereich der Transportvorrichtung bereits abgedeckt wird.

Entsprechend der bevorzugten Anzahl von 3 bis 10 Fächern ist auch die Transportvorrichtung vorzugsweise zum Transport von 3 bis 10 nebeneinander angeordneten einzelnen Furnierstreifen ausgebildet. Hierdurch können auch schmale und somit kostengünstige Furnierstreifen verwendet werden. Dabei ist es bspw. auch möglich, die Abstände zwischen einzelnen Furnierstreifen unterschiedlich auszugestalten.

Für eine weitere Verbesserung der Vorpositionierung der Furnierstreifen ist alternativ oder ergänzend zu der Verschiebvorrichtung eine Positionierungshilfe zum Vorpositionieren der Furniere in dem Furniermagazin angeordnet. Mit der Positionierungshilfe kann die Position der Furnierstreifen in Richtung quer zur Transportrichtung in dem Furniermagazin, bzw. in den Fächern verändert werden. Ergänzend kann die Positionierungshilfe auch für eine Veränderung der Position der Furnierstreifen in Transportrichtung ausgebildet sein. Dabei ist die Positionierungshilfe vorzugsweise dazu ausgebildet, jeweils einen gesamten Furnierstapel entsprechend in dem Furniermagazin und/oder den einzelnen Fächern zu bewegen. Alternativ oder ergänzend kann die Positionierungshilfe jedoch auch dazu ausgebildet sein, immer die als nächstes zu verwendenden Furnierstreifen von jedem Furnierstapel in ihrer Position quer zur Transportrichtung auszurichten. Die Positionierhilfe kann beispielsweise als Schiebevorrichtung zum Verschieben der einzelnen Furnierstreifen/Furnierstapel oder auch als Hebevorrichtung zum Anheben der Streifen und Ablegen ausgebildet sein.

Für eine weitere Verbesserung der Position der Furnierstreifen auf der Trägerplatte ist nach einer Weiterbildung der Erfindung eine Vorrichtung zum Bewegen der Furniere auf der Transportvorrichtung in Richtung quer zur Transportrichtung angeordnet. Diese Vorrichtung ermöglicht es, die Position der einzelnen Furnierstreifen jeweils für sich genommen in Richtung quer zur Transportrichtung noch einmal zu verändern. Hierdurch kann insbesondere eine Fehlpositionierung noch vor dem Auflegen der Furnierstreifen behoben werden. Die Vorrichtung zum Bewegen der Furniere auf der Transportvorrichtung in Richtung quer zur Transportrichtung kann beispielsweise mittels querwirkender Transportbänder ausgebildet sein. Besonders bevorzugt sind entsprechende Vakuumbänder angeordnet, die die Furnierstreifen quer zur Transportrichtung bewegen. Dabei ist die Vorrichtung insbesondere dazu ausgebildet jeden Furnierstreifen einzeln zu bewegen, so dass jeder Furnierstreifen individuell in seine besondere Position gebracht werden kann.

Zum Erfassen der Position der Furnierstreifen auf der Transportvorrichtung ist ein Überwachungssystem angeordnet, dass die Position der Furnierstreifen auf dem Transportband ermittelt. Das Überwachungssystem ist insbesondere als Kamerasystem ausgebildet, das die Furnierstreifen auf der Transportvorrichtung optisch erfasst und die Daten an eine entsprechende Steuereinheit weitergibt. Die Steuereinheit wiederum kann beispielsweise mit der Vorrichtung zum Bewegen der Furniere auf der Transportvorrichtung gekoppelt sein und diese entsprechend der von dem Überwachungssystem erfassten Daten ansteuern, um die Querpositionierung der Furnierstreifen auf der Transportvorrichtung anzupassen und damit eine exakte Positionierung auf der Trägerplatte zu gewährleisten.

Zum Auflegen der Furnierstreifen auf die Trägerplatte wird die Trägerplatte üblicherweise in Transportrichtung und entlang ihrer Transportebene bewegt. Die oberhalb der Transportebene angeordnete Transportvorrichtung bewegt die Furnierstreifen von schräg oben kommend auf die Trägerplatte. Dies erfolgt üblicherweise dahingehend automatisiert, dass die Transportvorrichtung mit ihrer Geschwindigkeit und ihrem Startzeitpunkt auf die Position und der Transportgeschwindigkeit der Trägerplatte abgestimmt ist. Um die Effizienz des Herstellungsprozesses zu verbessern, ist nach einer Weiterbildung der Erfindung eine Synchronisationsvorrichtung zum Synchronisieren des Transportes der Trägerplatte mit der Transportvorrichtung angeordnet. Die Synchronisationsvorrichtung ist insbesondere dazu ausgebildet die Geschwindigkeit der Transportvorrichtung, d. h. die Bewegungsgeschwindigkeit der Furnierstreifen derart anzupassen, dass eine optimierte Längspositionierung der Furnierstreifen auf die Trägerplatte erfolgt. Hierfür sind vorzugsweise entsprechende Vorrichtungen zum Erfassen der Trägerplatte angeordnet, die mit der Synchronisationsvorrichtung in Verbindung stehen und ihr die jeweilige Position der Trägerplatte mitteilen. Auch kann die Synchronisationsvorrichtung mit dem Überwachungssystem gekoppelt sein und Daten von der Synchronisationsvorrichtung zur Position der Furnierstreifen empfangen, auswerten und zur Ansteuerung der Transportvorrichtung nutzen. Auch kann beispielsweise die Steuereinheit des Überwachungssystems dazu ausgebildet sein, nicht nur die Vorrichtung zum Bewegen der Furnierstreifen, sondern auch die Synchronisationsvorrichtung jeweils in Abhängigkeit der erfassten Position der Furnierstreifen auf der Transportvorrichtung und/oder der Position der Trägerplatte anzusteuern.

Nach einer Weiterbildung der Erfindung ist vorgesehen, dass mindestens zwei Furniermagazine in eine Transportrichtung der Furnierstreifen hintereinander angeordnet sind. Die beiden in Transportrichtung hintereinander vorgesehenen Furniermagazine können entweder dazu genutzt werden zwei Lagen von Furnieren übereinander anzuordnen oder auch die Furnierstreifen einer Lage entsprechend nebeneinander zu platzieren. Gerade bei einer Positionierung der Furnierstreifen auf der Trägerplatte mit einem sehr geringen Abstand kann es sehr hilfreich sein, die Furnierstreifen über zwei hintereinander angeordnete Furniermagazine auf die Trägerplatte aufzubringen. Das zweite Furniermagazin kann selbstverständlich entsprechend der vorgenannten Ausführungen ausgebildet sein und auch alle entsprechenden Merkmale, Steuerungseinheiten und vorgeschriebenen Eigenschaften des ersten Furniermagazin aufweisen.

Weiter wird die Aufgabe der Erfindung gelöst durch ein Verfahren zum Ablegen von Furnierstreifen auf eine Trägerplatte mit den Schritten: Positionieren von mindestens zwei Furnierstreifen nebeneinander und in einem vorgegebenen Abstand zueinander auf einer Transportvorrichtung, wobei die Furnierstreifen auf der Transportvorrichtung von einem Überwachungssystem erfasst und bei einer Abweichung von einer Sollposition quer zur Transportrichtung bewegt werden, Bewegen der Furnierstreifen mittels der Transportvorrichtung entlang einer schräg nach unten geneigten Ebene zu einem unteren Ende der Transportvorrichtung, gleichzeitiges Überführen der Furnierstreifen von der Transportvorrichtung auf die Trägerplatte derart, dass die Furnierstreifen auf der Trägerplatte nebeneinander und in einem vorgegebenen Abstand zueinander auf der Trägerplatte abgelegt werden.

Die Positionierung der Furnierstreifen auf der Transportvorrichtung mit dem vorgegebenen Abstand und der Zuführung der Furnierstreifen mittels der Transportvorrichtung, die die Furnierstreifen von schräg oben kommend auf der Trägerplatte ablegt, ermöglicht das einfache, schnelle und präzise Auflegen der Furnierstreifen auf die Trägerplatte. Zudem bietet die Transportvorrichtung eine vorteilhafte Möglichkeit einer besonders präzisen Vorpositionierung der Furnierstreifen.

Die Transportvorrichtung ist insbesondere als Transportband ausgebildet, sodass die Furnierstreifen bspw. auf das obere Ende des Transportbands aufgelegt werden. Das Transportband erstreckt sich vom oberen Ende schräg nach unten in Richtung der Transportebene der Trägerplatte. Das Transportband erstreckt sich dabei entlang einer geneigten oder auch schrägen Ebene oder bildet diese selbst aus.

Unter dem vorgegebenen Abstand wird insbesondere verstanden, dass zwischen den beiden Furnierstreifen ein Spalt, d. h. eine Lücke ausgebildet wird. Die auf der Trägerplatte abgelegten Furnierstreifen sind daher vorzugsweise nicht in Kontakt miteinander. Ein solcher Spalt weist vorzugsweise eine Breite im Bereich von ca. 5 mm bis 5 cm auf und ist über seine Länge vorzugsweise gleichbleibend, d. h. die beiden Furniere sind mit ihren Außenkanten parallel zueinander. Dabei ist anzumerken, dass die Furnierstreifen als solches üblicherweise auch zumindest zwei parallele Längskanten aufweisen.

In besonderen Fällen kann es vorteilhaft sein die Furnierstreifen oder zumindest einiger der abgelegten Furnierstreifen, derart anzuordnen, dass sie eine geschlossene Oberfläche ausbilden. In diesem Fall sind die Furnierstreifen mit ihren jeweiligen zueinander zeigenden Außenkanten direkt aneinander angeordnet (sie sind in Kontakt), sodass kein Spalt und keine Lücke ausgebildet ist. Bei einer derartigen Ausbildung beträgt der vorgegebene Abstand 0 mm +/-0,25 mm.

Für einen sicheren Transport und eine besonders präzise Beibehaltung der Position auf dem Transportband werden die Furnierstreifen beim Transport mit der Transportvorrichtung fixiert. Hierfür werden die Furnierstreifen bevorzugt angesaugt, d. h., die Furnierstreifen werden von ihrer Unterseite angesaugt. Hierfür kann im Bereich der Transportvorrichtung eine Vakuumsaugvorrichtung angeordnet sein.

Die Furniere werden vorzugsweise in einem Furniermagazin, das im Bereich des oberen Endes der Transportvorrichtung angeordnet ist bereitgestellt. In das Furniermagazin, das zudem einzelne Fächer aufweisen kann, werden die Furnierstreifen gestapelt, d. h. als Furnierstapel abgelegt.

Die Furnierstreifen können beispielsweise mittels einer Ziehvorrichtung aus dem Furniermagazin auf das Transportband gezogen werden. Vorteilhafterweise werden sie jedoch mittels eines Vakuumsaugers im Bereich des Furniermagazins erfasst und auf dem Transportband in einer vorgegebenen Position abgelegt, d. h. sie werden auf dem Band vorpositioniert. Zum Vereinfachen der Überführung der Furnierstreifen aus dem Furniermagazin auf die Transportvorrichtung ist nach einer Weiterbildung der Erfindung vorgesehen, dass das Furniermagazin und/oder Fächer der Furniermagazine, in denen die Furnierstreifen gelagert sind, für eine Vorpositionierung quer zur Transportrichtung bewegt werden. Dabei nimmt das Furniermagazine und/oder die Fächer eine Position ein, in der die in dem Furniermagazin oder den Fächern vorliegenden Furnierstreifen, zumindest in Richtung quer zur Transportrichtung, weitestgehend ihre Sollposition auf der Transportvorrichtung einnehmen.

Hierdurch wird gewährleistet, dass die Furnierstreifen sich in Richtung quer zur Transportrichtung bereits vor dem Überführen auf die Transportvorrichtung zumindest weitestgehend in der richtigen Position befinden, sodass sie beim Überführen von dem Furniermagazin auf die Transportvorrichtung vorrangig nur eine Bewegung in Richtung der späteren Transportrichtung erfahren.

Für eine weitere Präzisierung der Position der Furnierstreifen auf der Transportvorrichtung und um eine mögliche Fehlpositionierung zu beheben ist nach der Erfindung vorgesehen, dass die Furnierstreifen auf der Transportvorrichtung von einem Überwachungssystem erfasst und bei einer Abweichung von einer Sollposition quer zur Transportrichtung bewegt werden. Das Überwachungssystem ist dabei insbesondere als Kamerasystem ausgebildet, das die erfassten Daten an eine entsprechende Steuereinheit weiterleitet. Die Bewegung der Furnierstreifen auf der Transportvorrichtung in Richtung quer zur Transportrichtung erfolgt wiederum über eine entsprechende Vorrichtung zum Bewegen der Furnierstreifen auf der Transportvorrichtung. So können beispielsweise entsprechende querwirkende Transportbänder, beispielsweise Vakuumbänder angeordnet sein. Vorzugsweise kann dabei jeder Furnierstreifen einzeln angesteuert und quer zur Transportrichtung bewegt werden.

Um das Ablegen der Furnierstreifen auf der Trägerplatte weiter zu verbessern, ist nach einer Weiterbildung der Erfindung vorgesehen, dass der Transport der Furnierstreifen an einen Transport der Trägerplatte angepasst wird, sodass die Furnierstreifen eine optimale Längspositionierung auf der Trägerplatte erfahren. Hierfür ist insbesondere eine Synchronisationsvorrichtung angeordnet, die insbesondere die Transportgeschwindigkeit der Furnierstreifen auf der Transportvorrichtung, d. h. beispielsweise die Geschwindigkeit der Transportbänder der Transportvorrichtung anpassen kann. Die Synchronisationsvorrichtung ist zudem vorzugsweise dazu ausgebildet, die Trägerplatte und insbesondere die Transportgeschwindigkeit und Transportposition zu erfassen und zu verarbeiten. Auch kann die Synchronisationsvorrichtung beispielsweise mit dem Überwachungssystem gekoppelt sein, sodass auch die von dem Überwachungssystem erfassten Furnierstreifen und deren Position in die Synchronisationssteuerung eingehen.

Die Furnierstreifen können unmittelbar auf der Trägerplatte abgelegt werden, wenn sie auf der der Trägerplatte zugewandten Seite mit einem Bindemittel beschichtet sind. In diesem Fall kann die Oberseite der Trägerplatte Markierungen, vorzugsweise farbige Markierungen aufweisen, insbesondere dann, wenn die Furnierstreifen in einem vorgegebenen Abstand voneinander auf die Trägerplatte aufgebracht werden sollen. Wird nicht mit Bindemittel versehenes Furnier auf die Trägerplatte aufgebracht, so wird bevorzugt ein mit Kunstharz getränktes Vlies oder Gewebe zwischen dem Furnierstreifen und der Oberfläche der Trägerplatte eingelegt, auf die der Furnierstreifen aufgebracht werden soll. Sollen die nicht mit Bindemittel versehenen Furnierstreifen in einem vorgegebenen Abstand voneinander auf die Trägerplatte aufgebracht werden, so kann eine Markierung, vorzugsweise eine farbige Markierung auf das kunstharzgetränkte Papier oder Vlies aufgebracht werden. Die Markierung kann in einfacher Form als Markierung mindestens von zwei Eckpunkten der Position des jeweiligen Furnierstreifens angedeutet sein. Die Markierung kann jedoch auf dem Papier bzw. Vlies auch als vollständige Umrandung der Position des jeweiligen Furnierstreifens oder als flächige Markierung einer Auflagefläche des Furnierstreifens auf dem Papier oder Vlies bzw. der Trägerplatte aufgetragen sein. Der Vorteil der farbigen Markierung ist die einfache Erkennbarkeit der vorgegebenen Position für den Furnierstreifen auf der Trägerplatte bzw. dem kunstharzgetränkten Papier oder Overlay, zusätzlich mit der Möglichkeit, eine Kontrolle durchzuführen, ob der Furnierstreifen korrekt abgelegt wird. Schließlich eröffnet sich damit auch die Möglichkeit, die Position des Furnierstreifens auf der Trägerplatte bzw. dem kunstharzgetränkten Papier oder Vlies optional nachträglich zu korrigieren.

Zu diesem Zweck ist die Vorrichtung mit einem Mittel zum Überwachen der Position des Furnierstreifens auf der Trägerplatte oder dem kunstharzgetränkten Papier oder Vlies ausgestattet, z. B. mit einer Kamera oder anderen Mitteln zum bevorzugt optischen Erfassen der Position des Furnierstreifens. Optional kann die Vorrichtung noch Mittel zum Korrigieren der Position des Furnierstreifens auf der Trägerplatte oder dem kunstharzgetränkten Papier oder Vlies aufweisen, beispielsweise Mittel, die ein gezieltes Verschieben in Transportrichtung oder quer dazu oder ein Drehen des nicht wie vorgesehen positionierten Furnierstreifens ermöglichen. Diese Mittel können als Schieber oder als Greifer ausgebildet sein, die auf den Furnierstreifen einwirken.

Soll eine Trägerplatte beidseitig furniert werden, wird nach einer vorteilhaften Ausführung der Erfindung eine zweite Vorrichtung zum Ablegen von Furnierstreifen vorgesehen, die in allen Merkmalen so ausgebildet sein kann wie die vorstehend beschriebene erfindungsgemäße Vorrichtung. Mittels dieser Vorrichtung werden Furnierstreifen auf einem Transportband abgelegt. Sind die Furnierstreifen mit einem Bindemittel beschichtet, so weist auch hier die mit dem Bindemittel beschichtete Seite zur Trägerplatte, in diesem Fall also nach oben. Sind die Furniere unbehandelt, so wird auf dem oder den Furnierstreifen ein kunstharzgetränktes Papier oder Vlies abgelegt. Auf dem oder den Furnierstreifen bzw. dem Papier oder Vlies wird dann die Trägerplatte abgelegt. Die auf dem bzw. den Furnierstreifen bzw. dem Papier oder Vlies ruhende Trägerplatte wird dann -wie vorstehend beschrieben- mit einem oder mehreren Furnierstreifen beschichtet, ggf. nach Einlegen eines kunstharzgetränkten Papiers oder Vlieses.

Der so hergestellte Stapel aus Trägerplatte und einseitig oder beidseitig aufgelegten Furnierstreifen, ggf. mit kunstharzgetränktem Vlies oder Gewebe, wird dann in einer Presse unter Einwirkung von Druck und Hitze verpresst, so dass der oder die Furnierstreifen sich mit der Trägerplatte verbinden.

Obwohl manche Aspekte im Zusammenhang mit einer Vorrichtung beschrieben wurden versteht es sich, dass diese Aspekte auch eine Beschreibung des beanspruchten Verfahrens darstellen, sodass ein Block- oder ein Bauelement einer der beschriebenen Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Im Weiteren wird die Erfindung anhand von mehreren Ausführungsbeispielen näher erläutert. Es zeigen:
- Fig. 1: schematisch in einer Seitenansicht eine Vorrichtung zum Ablegen von Furnierstreifen auf eine Trägerplatte und eine Kurztaktpresse;
- Fig. 2: schematisch in einer Draufsicht die Vorrichtung aus Figur 1.
- Bsp. 1: beschreibt die Grundzüge der einzelnen Verfahrensschritte zum Herstellen eines Furnierbodens unter Verwendung einer Vorrichtung zum Ablegen von Furnierstreifen.

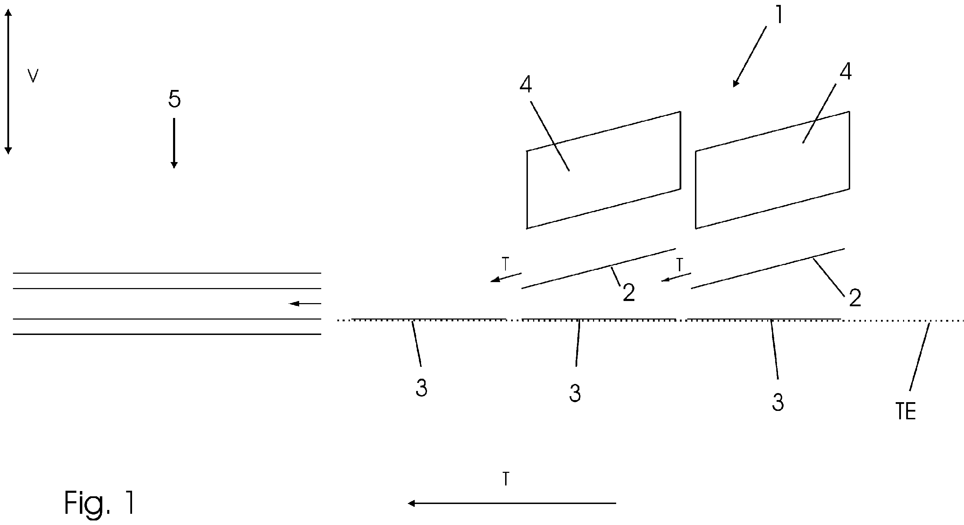

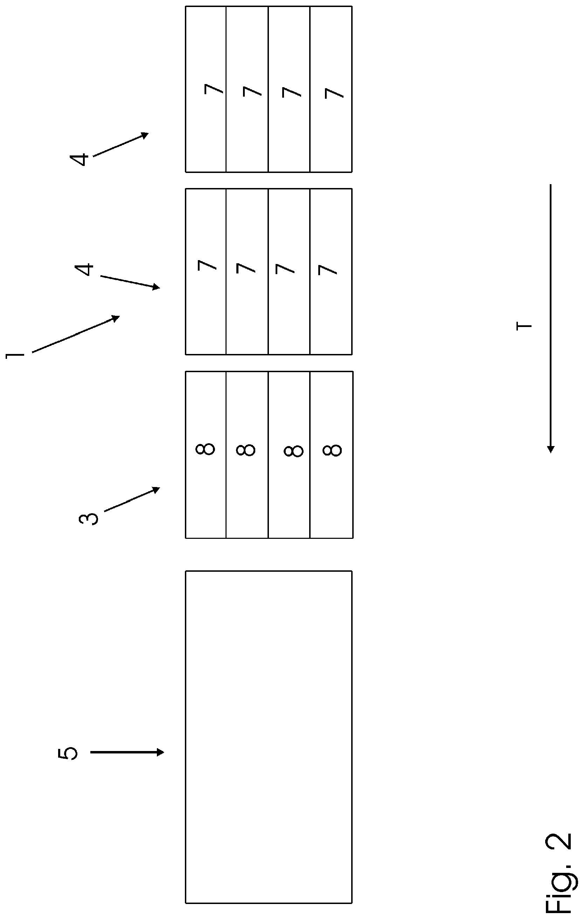

Figur 1 zeigt in einer Seitenansicht eine Vorrichtung 1 zum Ablegen von Furnierstreifen 8 (siehe Figur 2) auf eine Trägerplatte 2. Die Vorrichtung 1 weist zwei Furniermagazine 4 auf, die in Transportrichtung T hintereinander angeordnet sind. Jedem Furniermagazin 4 ist eine Transportvorrichtung 2 zugeordnet, die in Vertikalrichtung V unterhalb der Furniermagazine angeordnet sind. Die Transportvorrichtungen 2 umfassen Transportbänder zum Transport von aus den Furniermagazinen 4 kommenden Furnierstreifen (hier nicht dargestellt) auf die Trägerplatten 3. Die Transportvorrichtungen 2 sind ausgehend von einer Transportebene TE der Trägerplatten 3 sich entgegen der Transportrichtung T nach schräg oben erstreckend angeordnet. Jede Transportvorrichtung 2 bilden somit eine schräge Ebene aus.

Die Trägerplatten 3 werden entlang der Transportebene TE in Transportrichtung T ebenfalls von einer Transportvorrichtung (hier nicht dargestellt) unter den Vorrichtungen 1 und den Transportvorrichtungen 2 hindurch zu einer Kurztaktpresse 5 bewegt.

Die Transportvorrichtungen 2 grenzen mit ihrem unteren Ende 6 an die Transportebene TE an, sodass von der Transportvorrichtung 2 kommende Furnierstreifen 8 auf die sich in Transportrichtung T bewegenden Trägerplatten 3 aufgelegt und von diesen mitgenommen werden.

Der Stapel (hier nicht dargestellt) aus Trägerplatte 3 und aufgelegten Furnierstreifen 8, gegebenenfalls ergänzt um weitere Lagen, wird in die Kurztaktpresse 5 eingefahren und dort unter Einwirkung von Druck und Wärme verpresst. Bei der Herstellung der Furnierböden dringt das unter Wärme und Druck flüssige Kunstharz in die Furnierstreifen 8 ein, verklebt diese mit der Trägerplatte 3 und bildet eine besonders widerstandsfähige Oberfläche aus.

Figur 2 zeigt schematisch in einer Draufsicht die Vorrichtung aus Figur 1. Deutlich erkennbar sind die beiden Furniermagazine 4 mit hier jeweils vier, quer zur Transportrichtung T nebeneinander angeordneten Fächern 7. In jedem Fach 7 ist ein Stapel aus Furnierstreifen 8 eingelegt. In Transportrichtung T hinter den beiden Furniermagazinen 4 ist eine Trägerplatte 3 dargestellt, auf der vier Furnierstreifen 8 nebeneinander aufgelegt sind. Die Furnierstreifen 8 sind, hier nicht dargestellt, beabstandet zueinander auf der Trägerplatte 3 aufgelegt und präzise in einer Sollposition positioniert. Der Stapel aus Trägerplatte 3 und Furnierstreifen 8 ist bereit, um in die Kurztaktpresse 5 eingefahren und in dieser verpresst zu werden.

### Beispiel 1

Im Weiteren wird anhand eines Ausführungsbeispiels die Herstellung eines Furnierbodens unter Zuhilfenahme der Vorrichtung zum Ablegen der Furnierstreifen 8 beispielhaft erläutert. Zum Herstellen des Furnierbodens wird vor einer Kurztaktpresse 5 in einer Ziehvorrichtung ein vollformatiges Gegenzugfurnier vorgelegt. Das Furnier kann beispielsweise ein Pappelfurnier mit einer Stärke von 0,7 mm und einem Format von 2.800 mm × 2.070 mm sein. Auf dieses Furnier wird ein kunstharzimprägniertes Vlies oder Gewebe, hier ein melaminharzimprägniertes Papier, ein sogenanntes Overlay, beispielsweise mit einem Papiergewicht von 25 g/m² und einem Endgewicht von 160 g/m² bei einem Vc-Wert von 6 % im gleichen Format wie das Furnier gezogen. Das Overlay enthält neben dem Melaminharz die üblichen Hilfsstoffe wie Härter usw. In der nächsten Station wird eine 8 mm HDF im gleichen Format wie das Furnier aufgelegt. Danach erfolgt das Auflegen eines weiteren Overlays mit den gleichen Parametern wie das vorherige. Zusätzlich wurde auf dieses Overlay eine schwarze Digitaldrucktinte in einer Menge von 15 g fl./m²aufgebracht. Der so hergestellte Stapel aus Gegenzug, Overlay und HDF (im Weiteren nur Trägerplatte 3 genannt) wird unter den Furniermagazinen 4 entlang transportiert. Zum Auflegen der Furnierstreifen 8 werden aus einem Furniermagazin 4 mit beispielsweise sechs Fächern 7 Furnierstreifen 8 aus Eichenholz mit einem Format von 1.380 mm × 300 mm × 0,7 mm auf eine erste Hälfte der Trägerplatte 3 aufgelegt. Dies erfolgt, indem die Eichenfurniere aus den Fächern 7 mittels eines Vakuumsaugers auf die Transportvorrichtung 2 gehoben werden und von der Transportvorrichtung 2, die Vakuumbänder umfasst, auf das auf der HDF liegende Overlay transportiert werden. Die Fächer 7 wurden vorher entsprechend der Sollposition auf der Trägerplatte 3 quer zur Transportrichtung T vorpositioniert. Beim Transport mit der Transportvorrichtung 2 wurden die Furnierstreifen 8 zudem von einem Überwachungssystem erfasst und bei einer erfassten Abweichung von der Sollposition mittels einer Vorrichtung quer zur Transportrichtung T bewegt. Für eine exakte Längspositionierung der Furnierstreifen 8 auf der Trägerplatte 3 wurde zudem von einer Synchronisationsvorrichtung eine Synchronisierung der Geschwindigkeit der Transportvorrichtung an die Position und Geschwindigkeit der Trägerplatte durchgeführt.

Die Furnierstreifen 8 werden mit einem ersten Ende auf die Trägerplatte 3 aufgelegt und dann von der sich in Transportrichtung T bewegenden Trägerplatte 3 mitgenommen. Dabei werden die Furnierstreifen 8 mit einem Abstand von 40 mm zueinander aufgelegt. Die beiden äußeren Furnierstreifen 8 liegen zudem 35 mm von jeweils einem Längsrand der Trägerplatte 3 entfernt. Damit ist sichergestellt, dass gegebenenfalls angeordnete Klemmleisten o.ä. beim Aufnehmen der Trägerplatte 3 die äußeren Furnierstreifen 8 nicht verschiebt oder beschädigt. Der Abstand vom Querrand beträgt 10 mm. Diese Belegung wird auf der zweiten Hälfte der Trägerplatte 3 wiederholt, wobei zwischen den Furnierstreifen 8 in Längsrichtung in der Mitte der Trägerplatte 3ein Abstand von ca. 20 mm vorhanden ist. Die so belegte Trägerplatte 3wird anschließend in die Kurztaktpresse 5 transportiert und beispielsweise bei einer Presstemperatur von 180 °C und einem Druck von 35 Kilo/cm² verpresst. Nach dem Pressen und Abkühlen werden die derart hergestellten großformatigen mit Furnierstreifen 8 belegten Trägerplatte 3 beispielsweise mittels einer Fräsvorrichtung zu Bodenbelägen weiterverarbeitet.

### Beispiel 2

Dieses Ausführungsbeispiel stimmt mit dem Beispiel 1 überein; lediglich abweichende oder ergänzende Aspekte werden im Beispiel 2 gesondert erläutert.

Ein erster Furnierstreifen, der aus zusammengesetzten, insbesondere verklebten Furnierteilen hergestellt ist, und der mit den Abmessungen von 2800 mm × 2070 mm die Größe der Trägerplatte aufweist, wird dem Furniermagazin einer zweiten Vorrichtung zum Ablegen von Furnierstreifen entnommen und über die zugehörige Transportvorrichtung auf einem Förderband abgelegt, das in der Transportebene verläuft. Dieser erste Furnierstreifen dient z. B. als Gegenzug oder als dekorative Oberfläche.

Handelt es sich um ein einseitig mit Bindemittel beschichtetes Furnier, so weist die mit Bindemittel beschichtete Seite nach oben. Handelt es sich alternativ um ein unbehandeltes Furnier, dann wird nachfolgend ein kunstharzimprägniertes Vlies oder Gewebe, meist ein melaminharzimprägniertes Papier auf dem Förderband abgelegt. Das Vlies oder Gewebe, das ebenfalls die Länge und Breite der Trägerplatte aufweist, wird einem Magazin entnommen, das in Transportrichtung nach dem Furniermagazin für den ersten Furnierstreifen angeordnet ist.

Auf das Furnier bzw. dessen Bindemittelschicht oder auf das kunstharzimprägnierte Vlies oder Gewebe wird dann die Trägerplatte aufgelegt, z. B. eine 8 mm dicke HDF-Platte. Die auf dem Furnier bzw. dem Vlies oder Gewebe ruhende Trägerplatte wird in Transportrichtung weitergefördert. Wie vorstehend für das Beispiel 2 beschrieben, werden entweder ein oder mehrere Furnierstreifen, die mit Bindemittel beschichtet sind, oder ein kunstharzbeschichtetes Vlies oder Gewebe und mindestens ein unbehandelter Furnierstreifen, jedoch in umgekehrter Reihenfolge wie vorstehend beschrieben, auf die Trägerplatte aufgelegt. Dabei werden Furnierstreifen und ggf. kunstharzgetränktes Vlies oder Gewebe wie vorstehend beschrieben jeweils aus einem Magazin entnommen und mittels der Transportvorrichtung auf der Trägerplatte abgelegt. Die so beidseitig mit jeweils mindestens einem Furnierstreifen und optional eingelegtem, kunstharzgetränktem Vlies oder Gewebe belegte Trägerplatte wird anschließend gemäß Beispiel 1 in einer Presse verpresst.

### Beispiel 3

Auch dieses Beispiel baut auf dem Beispiel 1 auf und es werden nur Abweichungen zum Beispiel 1 erläutert. Die Trägerplatte wird in Transportrichtung in der Transportebene gefördert. Auf der Oberfläche der Trägerplatte sind im Abstand voneinander Markierungen angebracht, z. B. mit schwarzer bzw. farbiger Tinte oder Farbe. Alternativ wird auf die Trägerplatte ein kunstharzgetränktes Vlies oder Gewebe aufgelegt, wobei farbige Markierungen auf dem Vlies oder Gewebe angebracht sind.

Die Markierungen sind entweder als Punkte oder Linien ausgeführt, die die Position eines oder mehrerer Furnierstreifen anzeigen. Zwei Punkte oder Linien sind in der Regel erforderlich, um die Position eines Furnierstreifens vorzugeben. Die Markierungen werden bevorzugt mit Tinte oder Farbe erzeugt, sie können jedoch auch auf andere Weise erzeugt werden. Die Markierungen können auch als Fläche, insbesondere farbige Fläche ausgebildet sein, wobei dann die Fläche die Position des Furnierstreifens oder die Fläche anzeigt, die nicht vom Furnierstreifen abgedeckt wird.

Der Abstand der Furnierstreifen kann im Prinzip frei gewählt werden, ist jedoch meist auf wenige mm oder cm beschränkt, um Verschnitt zu vermeiden. Als allgemein üblich kann z. B. ein Abstand von bis zu 5 cm angesehen werden, bevorzugt von bis zu 3 cm. Der vorgegebene Mindestabstand zwischen zwei Furnierstreifen kann 0, 3 mm betragen.

Die Furniere sind z. B. so positioniert, dass sie einzelne Paneele abdecken, die aus der furnierten Trägerplatte hergestellt werden sollen. Der Raum zwischen den Markierungen ist entsprechend für die Schnittfuge vorgesehen. Optional kann der Raum auch Bereiche umfassen, die zum Erzeugen eines Profils an den Kanten der herzustellenden Paneele ausgearbeitet werden sollen. Durch die Anordnung von Furnierstreifen im Abstand voneinander wird das Furnier gezielt und ohne Verschnitt zur Erzeugung dekorativer Oberflächen eingesetzt.

### Beispiel 4

Nach einer Weiterbildung des Beispiels 3 weist die Vorrichtung zum Ablegen von Furnierstreifen auf einer Trägerplatte in Transportrichtung stromabwärts von dem mindestens einen Furniermagazin und der jeweils zugehörigen Transportvorrichtung oberhalb der Transportebene angeordnete Mittel zum Erfassen der Position des bzw. der Furnierstreifen sowie der Markierungen auf der Trägerplatte bzw. dem kunstharzimprägnierten Vlies oder Gewebe auf. Diese Mittel zum Erfassen der Position des bzw. der Furnierstreifen, z. B. eine Kamera, erfasst, ob die Markierungen vollständig vom dem Furnierstreifen abgedeckt sind oder nicht. Erfassen die Mittel zum Erfassen der Position mindestens eine Markierung ganz oder teilweise, dann veranlasst ein entsprechendes Signal die Steuereinrichtung, Mittel zum Korrigieren der Position des Furnierstreifens auf der Trägerplatte bzw. dem kunstharzgetränkten Papier zu betätigen. Die Steuereinrichtung ermittelt, welche Bewegung des Furnierstreifens erforderlich ist, um die vorgegebene Position zu erreichen, in der alle Markierungen vollständig abgedeckt sind. Die Mittel zum Korrigieren der Position, z. B. ein Schieber oder eine Klemmvorrichtung wird daraufhin mittels der Steuereinrichtung in Kontakt mit dem Furnier gebracht, um den Furnierstreifen zu verschieben oder zu verdrehen bis die gewünschte Position erreicht ist.

### Bezugszeichenliste

- 1: Vorrichtung
- 2: Transportvorrichtung
- 3: Trägerplatte
- 4: Furniermagazine
- 5: Kurztaktpresse
- 6: unteres Ende
- 7: Fächer
- 8: Furnierstreifen

- T: Transportrichtung
- TE: Transportebene

## Patentansprüche

1. Vorrichtung zum Ablegen von Furnierstreifen (8) auf einer Trägerplatte (3), umfassend
- ein Furniermagazin (4) im Bereich eines oberen Endes einer Transportvorrichtung (2) mit mindestens zwei Fächern (7), die zum Lagern und Bereitstellen von Furnierstreifen (8) ausgebildet sind,
- Mittel zum Überführen der Furnierstreifen (8) von den Fächern (7) auf die Transportvorrichtung (2),
- wobei die Transportvorrichtung (2) sich ausgehend von einem oberen Ende schräg nach unten in Richtung eines unteren Endes im Bereich einer Transportebene (TE) für die Trägerplatte (3) erstreckt, und dazu ausgebildet ist, mindestens zwei einzelne nebeneinander angeordnete Furnierstreifen (8) von dem oberen Ende zum unteren Ende zu transportieren und auf der Trägerplatte (3) abzulegen, und
- ein Überwachungssystem zum Erfassen der Position der Furnierstreifen (8) auf der Transportvorrichtung (2).

2. Vorrichtung nach Anspruch 1, **dadurch gekennzeichnet, dass** eine Verstellvorrichtung zum Bewegen der Transportvorrichtung (2) gegenüber der Transportebene (TE) angeordnet ist, wobei mittels der Verstellvorrichtung ein Winkel zwischen einer durch die Transportvorrichtung (2) gebildeten schrägen Ebene und der Transportebene (TE) vorzugsweise zwischen 10° und 60°, besonders bevorzugt zwischen 10° und 45°veränderbar ist und/oder der vertikale Abstand des unteren Endes der Transportvorrichtung (2) zur Transportebene (TE) einstellbar ist.

3. Vorrichtung nach mindestens einem der vorhergehenden Ansprüche, **dadurch gekennzeichnet, dass** die Mittel zum Überführen als Vakuumsauger ausgebildet sind.

4. Vorrichtung nach mindestens einem der vorhergehenden Ansprüche, **gekennzeichnet durch** eine Vakuumvorrichtung zum Erzeugen eines an der Transportvorrichtung (2) anliegenden Vakuums zum Fixieren der Furnierstreifen auf der Transportvorrichtung (2).

5. Vorrichtung nach mindestens einem der vorhergehenden Ansprüche, **gekennzeichnet durch** eine Verschiebevorrichtung zum Bewegen der Furniermagazine (4) und/oder der Fächer (7) in eine Richtung quer zur Transportrichtung (T).

6. Vorrichtung nach mindestens einem der vorhergehenden Ansprüche, **dadurch gekennzeichnet, dass** das Furniermagazin (4) drei bis zehn nebeneinander angeordneten Fächer (7) aufweist.

7. Vorrichtung nach mindestens einem der vorhergehenden Ansprüche, **dadurch gekennzeichnet, dass** die Transportvorrichtung (2) zum Transport von drei bis zehn nebeneinander angeordneten Furnierstreifen (8) ausgebildet ist.

8. Vorrichtung nach mindestens einem der vorhergehenden Ansprüche, **gekennzeichnet durch** Positionierungshilfen zum Vorpositionieren der Furnierstreifen (8) in dem Furniermagazin (4).

9. Vorrichtung nach mindestens einem der vorhergehenden Ansprüche, **dadurch gekennzeichnet, dass** eine Vorrichtung zum Bewegen der Furnierstreifen (8) auf der Transportvorrichtung in Richtung quer zu Transportrichtung (T) angeordnet ist.

10. Vorrichtung nach mindestens einem der vorhergehenden Ansprüche, **gekennzeichnet durch** eine Synchronisationsvorrichtung zum Synchronisieren des Transportes der Trägerplatte (3) mit der Transportvorrichtung (2).

11. Vorrichtung nach mindestens einem der vorhergehenden Ansprüche, **dadurch gekennzeichnet, dass** mindestens zwei Furniermagazine (4) in Transportrichtung (T) der Furnierstreifen (8) hintereinander angeordnet sind.

12. Verfahren zum Ablegen von Furnierstreifen (8) auf einer Trägerplatte (3) mit den Schritten:
- Positionieren von mindestens zwei Furnierstreifen (8) nebeneinander und in einem vorgegebenen Abstand zueinander auf einer Transportvorrichtung (2), wobei die Furnierstreifen (8) auf der Transportvorrichtung (2) von einem Überwachungssystem erfasst und bei einer Abweichung von einer Sollposition quer zur Transportrichtung (T) bewegt werden,
- Bewegen der Furnierstreifen (8) mittels der Transportvorrichtung (2) entlang einer schräg nach unten geneigten Ebene zu einem unten Ende der Transportvorrichtung (2),
- gleichzeitiges Überführen der Furnierstreifen (8) von der Transportvorrichtung (2) auf eine Trägerplatte (3) derart, dass die Furnierstreifen (8) auf der Trägerplatte (3) nebeneinander und in einem vorgegebenen Abstand zueinander auf der Trägerplatte (3) abgelegt werden.

13. Verfahren nach Anspruch 12, **dadurch gekennzeichnet, dass** die Furnierstreifen (8) in ein Furniermagazin (4) und/oder Fächer (7) des Furniermagazins (4) eingelegt sind und das Furniermagazin (4) und/oder die Fächer (7) zum Vorpositionieren quer zur Transportrichtung (T) bewegt werden.

14. Verfahren nach mindestens einem der Ansprüche 12 bis 13, **dadurch gekennzeichnet, dass** der Transport der Furnierstreifen (8) an einen Transport der Trägerplatte (3) angepasst wird, so dass die Längsposition der Furnierstreifen (8) auf der Trägerplatte (3) angepasst wird.

## Claims

1. Device for depositing veneer strips (8) on a carrier board (3), comprising
- a veneer magazine (4) in the region of an upper end of a transporting device (2) with at least two compartments (7) which are designed for storing and providing veneer strips (8),
- means for transferring the veneer strips (8) from the compartments (7) to the transporting device (2),
- wherein the transporting device (2) extends obliquely downwards from an upper end towards a lower end in the region of a transporting plane (TE) for the carrier board (3), and is designed to transport at least two individual adjacently arranged veneer strips (8) from the upper end to the lower end and to deposit them on the carrier board (3), and
- a monitoring system for detecting the position of the veneer strips (8) on the transporting device (2).

2. Device according to claim 1, **characterized in that** an adjusting device for moving the transporting device (2) relative to the transporting plane (TE) is arranged, wherein by means of the adjusting device an angle between an inclined plane formed by the transporting device (2) and the transporting plane (TE) can be varied preferably between 10° and 60°, particularly preferably between 10° and 45°, and/or the vertical distance of the lower end of the transporting device (2) from the transporting plane (TE) can be adjusted.

3. Device according to at least one of the preceding claims, **characterized in that** the means for transferring are designed as vacuum suction cups.

4. Device according to at least one of the preceding claims, **characterized by** a vacuum device for generating a vacuum applied to the transporting device (2) for fixing the veneer strips on the transporting device (2).

5. Device according to at least one of the preceding claims, **characterized by** a displacement device for moving the veneer magazines (4) and/or the compartments (7) in a direction transverse to the transport direction (T).

6. Device according to at least one of the preceding claims, **characterized in that** the veneer magazine (4) comprises three to ten adjacently arranged compartments (7).

7. Device according to at least one of the preceding claims, **characterized in that** the transporting device (2) is designed for transporting three to ten adjacently arranged veneer strips (8).

8. Device according to at least one of the preceding claims, **characterized by** positioning aids for pre-positioning the veneer strips (8) in the veneer magazine (4).

9. Device according to at least one of the preceding claims, **characterized in that** a device for moving the veneer strips (8) is arranged on the transporting device in the direction transverse to the transport direction (T).

10. Device according to at least one of the preceding claims, **characterized by** a synchronization device for synchronizing the transport of the carrier board (3) with the transporting device (2).

11. Device according to at least one of the preceding claims, **characterized in that** at least two veneer magazines (4) are arranged one behind the other in the transport direction (T) of the veneer strips (8).

12. Method for depositing veneer strips (8) on a carrier board (3) comprising the steps of:
- positioning of at least two veneer strips (8) next to one another and at a predetermined distance from one another on a transporting device (2), wherein the veneer strips (8) are detected on the transporting device (2) by a monitoring system and are moved transversely to the transport direction (T) in the event of a deviation from a target position,
- moving the veneer strips (8) by means of the transporting device (2) along a plane inclined obliquely downwards to a lower end of the transporting device (2),
- simultaneous transferring the veneer strips (8) from the transporting device (2) onto a carrier board (3) in such a way that the veneer strips (8) are deposited next to one another and at a predetermined distance from one another on the carrier board (3).

13. Method according to claim 12, **characterized in that** the veneer strips (8) are inserted into a veneer magazine (4) and/or compartments (7) of the veneer magazine (4) and the veneer magazine (4) and/or the compartments (7) are moved transversely to the transport direction (T) for pre-positioning.

14. Method according to at least one of claims 12 to 13, **characterized in that** the transport of the veneer strips (8) is adapted to a transport of the carrier board (3), so that the longitudinal position of the veneer strips (8) on the carrier board (3) is adapted.

## Revendications

1. Dispositif de dépose de bandes de placage (8) sur une planche support (3), comprenant
- un magasin de placages (4) situé à l'extrémité supérieure d'un dispositif de transport (2) et comportant au moins deux compartiments (7) destinés à stocker et à fournir des bandes de placages (8),
- des moyens pour transférer les bandes de placage (8) des compartiments (7) au dispositif de transport (2),
- dans lequel le dispositif de transport (2) s'étend obliquement vers le bas d'une extrémité supérieure vers une extrémité inférieure dans la zone d'un plan de transport (TE) pour la planche de support (3), et est conçu pour transporter au moins deux bandes de placage individuelles (8) disposées de manière adjacente de l'extrémité supérieure à l'extrémité inférieure et pour les déposer sur la planche de support (3), et
- un système de surveillance pour détecter la position des bandes de placage (8) sur le dispositif de transport (2).

2. Dispositif selon la revendication 1, **caractérisé par** la présence d'un dispositif de réglage pour déplacer le dispositif de transport (2) par rapport au plan de transport (TE), dans lequel le dispositif de réglage permet de faire varier l'angle entre un plan incliné formé par le dispositif de transport (2) et le plan de transport (TE), de préférence entre 10° et 60°, de préférence entre 10° et 45°, et/ou de régler la distance verticale de l'extrémité inférieure du dispositif de transport (2) par rapport au plan de transport (TE).

3. Dispositif selon au moins l'une des revendications précédentes, **caractérisé par le fait que** les moyens de transfert sont conçus comme des ventouses à vide.

4. Dispositif selon au moins une des revendications précédentes, **caractérisé par** un dispositif de vide pour générer un vide appliqué au dispositif de transport (2) pour fixer les bandes de placage sur le dispositif de transport (2).

5. Dispositif selon au moins une des revendications précédentes, **caractérisé par** un dispositif de déplacement pour déplacer les magasins de placage (4) et/ou les compartiments (7) dans une direction transversale à la direction de transport (T).

6. Dispositif selon au moins l'une des revendications précédentes, **caractérisé par le fait que** le magasin de placage (4) comprend de trois à dix compartiments (7) disposés de manière adjacente.

7. Dispositif selon au moins l'une des revendications précédentes, **caractérisé par le fait que** le dispositif de transport (2) est conçu pour transporter de trois à dix bandes de placage (8) disposées de manière adjacente.

8. Dispositif selon au moins l'une des revendications précédentes, **caractérisé par** des aides au positionnement pour prépositionner les bandes de placage (8) dans le magasin de placage (4).

9. Dispositif selon au moins une des revendications précédentes, **caractérisé en ce qu'**un dispositif de déplacement des bandes de placage (8) est disposé sur le dispositif de transport dans la direction transversale à la direction de transport (T).

10. Dispositif selon au moins une des revendications précédentes, **caractérisé par** un dispositif de synchronisation pour synchroniser le transport de la planche support (3) avec le dispositif de transport (2).

11. Dispositif selon au moins l'une des revendications précédentes, **caractérisé par le fait qu'**au moins deux magasins de placage (4) sont disposés l'un derrière l'autre dans la direction de transport (T) des bandes de placage (8).

12. Procédé de dépôt de bandes de placage (8) sur une planche support (3) comprenant les étapes suivantes :
- positionnement d'au moins deux bandes de placage (8) l'une à côté de l'autre et à une distance prédéterminée l'une de l'autre sur un dispositif de transport (2), les bandes de placage (8) étant détectées sur le dispositif de transport (2) par un système de surveillance et déplacées transversalement par rapport à la direction de transport (T) en cas d'écart par rapport à une position cible,
- déplacer les bandes de placage (8) au moyen du dispositif de transport (2) le long d'un plan incliné obliquement vers le bas jusqu'à une extrémité inférieure du dispositif de transport (2),
- transfert simultané des bandes de placage (8) du dispositif de transport (2) sur une planche de support (3) de manière à ce que les bandes de placage (8) soient déposées les unes à côté des autres et à une distance prédéterminée les unes des autres sur la planche de support (3).

13. Procédé selon la revendication 12, **caractérisé par le fait que** les bandes de placage (8) sont insérées dans un magasin de placage (4) et/ou dans des compartiments (7) du magasin de placage (4) et que le magasin de placage (4) et/ou les compartiments (7) sont déplacés transversalement par rapport à la direction de transport (T) pour être prépositionnés.

14. Procédé selon au moins une des revendications 12 à 13, **caractérisé en ce que** le transport des bandes de placage (8) est adapté à un transport de la planche support (3), de sorte que la position longitudinale des bandes de placage (8) sur la planche support (3) est adaptée .
